# EUROPEAN PATENT SPECIFICATION

(11) **EP 2 752 614 B1**
(45) Date of publication and mention of the grant of the patent: **22.06.2016**
(21) Application number: 12827347.1
(22) Date of filing: 20.03.2012
(51) Int. Cl.: F21S 2/00, F21V 7/04, F21V 19/00, F21V 7/00, F21Y 115/10, F21K 99/00

(54) **LARGE-ANGLE OMNIDIRECTIONAL LIGHTING LED LAMP**
LED-LAMPE FÜR OMNIDIREKTIONALE BELEUCHTUNG IN EINEM GROSSEN WINKEL
LAMPE À DEL À ÉCLAIRAGE OMNIDIRECTIONNEL À GRAND ANGLE

(30) Priority: 30.08.2011 CN 201110254731
(43) Date of publication of application: 09.07.2014
(73) Proprietor: Leeleds Lighting (Xiamen) Co., Ltd., Xiamen, Fujian 361010 (CN)
(72) Inventor: YANG, Xiaoming, Xiamen Fujian 361010 (CN); LI, Fuwen, Xiamen Fujian 361010 (CN)
(74) Representative: Hoffmann Eitle
(86) International application number: PCT/CN2012/072588
(87) International publication number: WO 2013/029365

(56) References cited:
- EP-A2- 2 644 977
- CN-A- 101 275 731
- CN-A- 102 305 363
- CN-U- 201 892 119
- CN-Y- 2 618 045
- CN-Y- 201 014 331
- GB-A- 2 460 703
- JP-A- 2006 324 036
- JP-A- 2010 157 459
- KR-B1- 101 047 312
- US-A1- 2004 057 252
- US-A1- 2009 303 731
- US-A1- 2011 140 149

## Description

### TECHNICAL FIELD

The present invention relates to LED lamps, particularly to an LED lamp with omnidirectional beam angle.

### BACKGROUND

LED light sources have advantages of high luminous efficiency, low heat generating, energy saving and long span-life, and thus are widely used. However, for characteristics of solid light sources, LED light sources can not obtain large beam angle as incandescent bulbs. Particularly for LED lamps of COB (chip on board), of which LED light sources are fixed on a heat transfer board thereof directly by COB, although heat dissipation efficiency thereof are improved, but beam angle thereof are less than 180 degrees for the heat transfer board being flat, and thus luminous intensities are uneven, affecting lighting effects.

In order to obtain omnidirectional beam angle, in prior art, light sources are usually mounted on planes of different angles (such as horizontal plane and vertical plane), and spherical sector shaped shells are used to make light with angles more than 180 degrees emit out. Such solution can obtain omnidirectional beam angle, but still has disadvantages as follows:
1. it is difficult to obtain uniform luminance on surfaces of the shell, and may generate spots and dark area on the shell;
2. it is difficult to mass-produce since each plane the light source being mounted needs an aluminum base, which increases load of paste aluminum base; and 3. It is difficult to line up the light source automatically to be sold to the aluminum base, which reduces productivity. JP-2010-157459 discloses a LED lamp comprising a light-emitting unit, a light-transmitting globe covering the light-emitting unit and a reflector.

### SUMMARY

From above, it is necessary to provide an LED lamp with omnidirectional beam angle, and is simple in structure and easy to produce.

A solution to solve the technical problem of the present invention is provided by claim 1:
An LED lamp includes a lamp holder, a lamp bulb shell, a light emitting unit, and a reflecting unit. The lamp bulb shell covers the light emitting unit. A bottom of the lamp bulb shell is fixed on the lamp holder. The reflecting unit is received in the lamp bulb shell, and includes a reflecting member. The reflecting member is fixed on the lamp holder, and includes an annular reflecting surface. The reflecting surface of the reflecting member faces the lighting emitting unit for reflecting light generated by the light emitting unit towards a bottom of the lamp bulb shell. Compared with the prior art, the LED lamp of the present invention includes reflecting unit disposed in the lamp bulb shell, and the reflecting member of the reflecting unit faces the light emitting unit, thus the annular reflecting surface reflects light of the light emitting unit to the bottom of the lamp bulb shell, thereby enhancing luminous intensity at the bottom of the lamp bulb shell, obtaining omnidirectional beam angle. Forever, the LED lamp of the present invention is simple in structure since the LED light sources need not to be mounted on 3D structures.

Another non-claimed LED lamp includes a lamp bulb shell, a light emitting unit and a reflecting unit. The lamp bulb shell covers the light emitting unit. The reflecting unit includes a reflecting member. The reflecting member is fixed on the lamp bulb shell, and includes an annular reflecting surface. The reflecting surface of the reflecting member faces the lighting emitting unit for reflecting light generated by the light emitting unit towards a bottom of the lamp bulb shell.

### BRIEF DESCRIPTION OF THE DRAWINGS

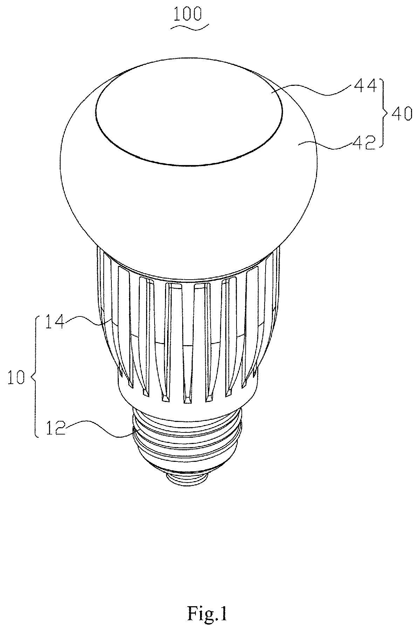

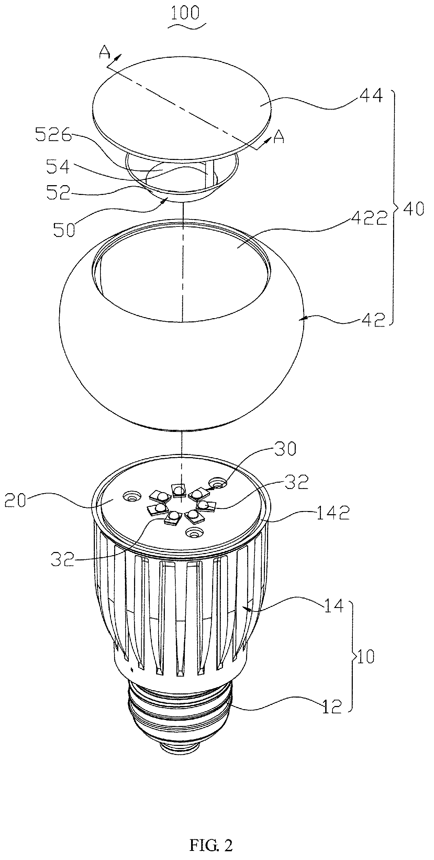

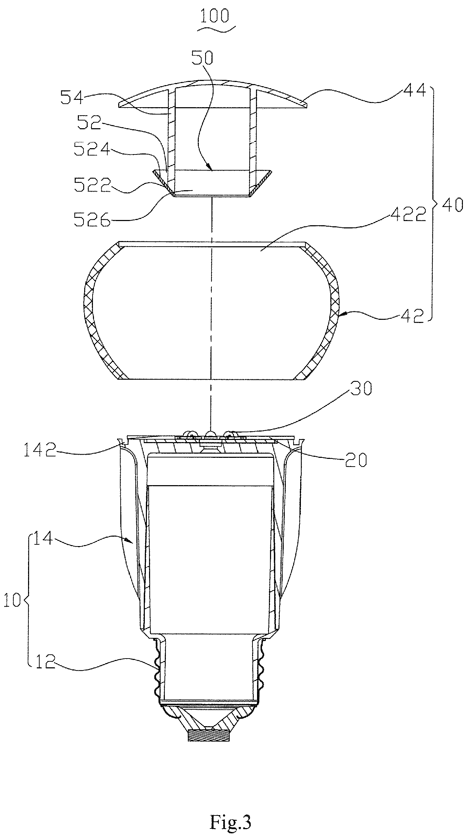

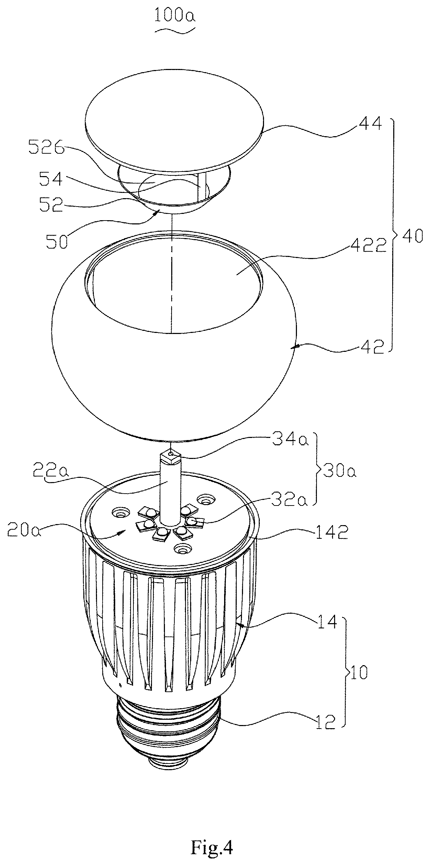

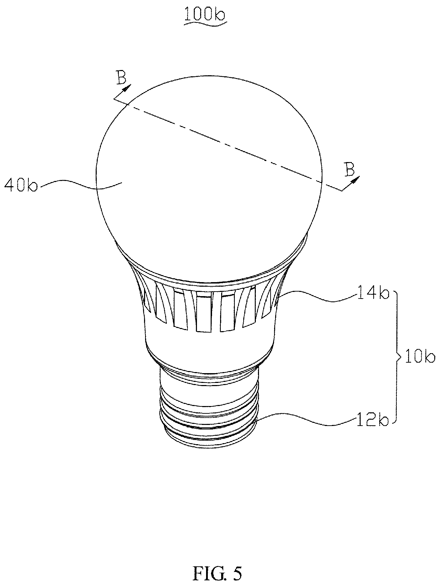

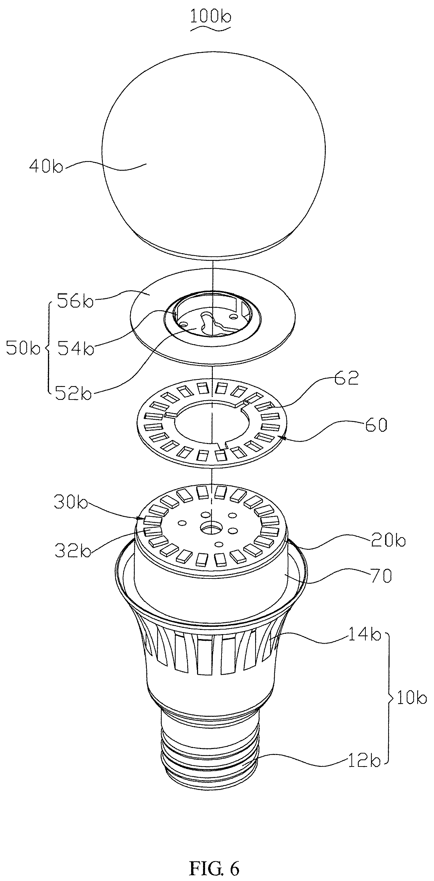

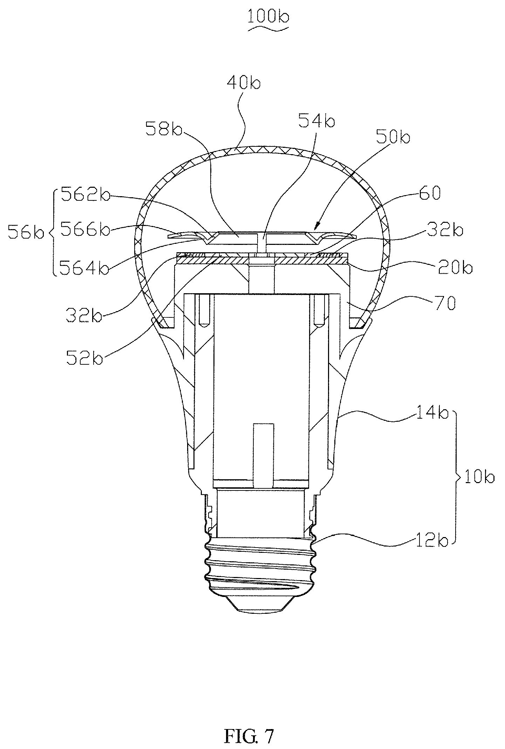

FIG. 1 is a schematic, assembled view of an LED lamp according to a first non-claimed embodiment of the present invention. FIG. 2 is an exploded view of the LED lamp of FIG. 1. FIG. 3 is a cross section of FIG. 2 taken along line A-A. FIG. 4 is a schematic, exploded view of an LED lamp according to a second non-claimed embodiment of the present invention. FIG. 5 is a schematic, assembled view of an LED lamp according to a third embodiment of the present invention. FIG. 6 is an exploded view of the LED lamp of FIG. 5. FIG. 7 is a cross section of FIG. 5 taken along line B-B.

### DETAILED DESCRIPTION OF EMBODIMENTS

The present invention will be described in detail with reference to the drawings and embodiments.

An LED lamp 100 according to a first embodiment of the present invention is shown in FIG. 1 to FIG. 3.

Please referring to FIG. 1 and FIG. 2, the LED lamp 100 includes a lamp holder 10, a heat transfer substrate 20, a light emitting unit 30, a lamp bulb shell 40, and a reflecting unit 50.

Please referring to FIG. 2 and FIG. 3, the lamp holder 10 includes a lamp seat 12 and a heat sink 14. The heat sink 14 is a conventional fin-type heat sink. A bottom of the heat sink 14 is fixed on the lamp seat 12. An annular groove 142 is defined in a top of the heat sink 14. The heat transfer substrate 20 is disk-shaped, and is arranged on a top of the lamp holder 10, i.e., the top of the heat sink 14. The light emitting unit 30 includes a plurality of LED light sources 32. The LED light sources 32 are arranged around a center of the heat transfer substrate 20, and are evenly disposed on a top surface of the heat transfer substrate 20. The heat transfer substrate 20 is fixed in the annular groove 142 and is thermally connected to the heat sink 14.

Please referring to FIG. 1 to FIG. 3, the lamp bulb shell 40 is generally spherical sector shaped with a bottom thereof being open. Light scattering material is provided on the lamp bulb shell 40. The lamp bulb shell 40 covers the light emitting unit 30 and the heat transfer substrate 20, separating the light generating unit and the heat transfer substrate 20 from the environment, ensuring that the LED lamp 100 operates safely and stably. The lamp bulb shell 40 includes a lampshade 42 and a lamp cover 44. The lampshade 42 forms an opening 422 at a top thereof. The lamp cover 44 is generally circular. In assembly, the lamp cover 44 is received in the opening 422, and is connected to the lampshade 42 by ultrasonic welding to form the lamp bulb shell 40, and thus an outer surface of the lamp bulb shell 40 is smooth and seamless. A bottom of the lampshade 42, i.e., the bottom of the lamp bulb shell 40, is inserted in the annular groove 142 of the heat sink 14, and receives the heat transfer substrate 20 therein.

Please referring to FIG. 2 and FIG. 3, the reflecting unit 50 includes a reflecting member 52 and two connecting rods 54. The reflecting member 52 is fixedly connected to a bottom of the lamp cover 44 of the lamp bulb shell 40 by the two connecting rods 54, and is located over the light emitting unit 30. The reflecting member 52 is hollow, annular and frustum-shaped. An outer diameter of the reflecting member 52 increases gradually along a direction away from the light emitting unit 30. Outer and inner annular surfaces of the reflecting member 52 are defined as first reflecting surface 522 and second reflecting surface 524. The first reflecting surface 522 faces the light emitting unit 30. The second reflecting surface 524 faces a top of the lamp bulb shell 40. An inner diameter of the reflecting member 52 increases gradually along the direction away from the light emitting unit 30. The reflecting member 52 forms an aperture 526 extending through thereof. Alternatively, the reflecting member 52 can also be connected to an end surface of the heat transfer substrate 20 by the connecting rods 54.

During operation of the LED lamp 100, the light emitting unit 30 emits light upwardly to the reflecting member 52. The first reflecting surface 522 of the reflecting member 52 reflects the light towards the bottom of the lamp bulb shell 40, thus luminous intensity at a portion of the lamp bulb shell 40 beneath the heat transfer substrate 20 is also strong, thereby enlarging beam angle of the LED lamp 100. For the aperture 526 formed in the reflecting member 52, and the inner diameter of the reflecting member 52 increasing along the direction away from the light emitting unit 30, the second reflecting surface 524 of the reflecting member 52 reflects the light towards the top of the lamp bulb shell 40. Thus, noticeable shadows are avoided forming on the lamp bulb shell 40 for blocking of the reflecting member 52 during lighting, as viewed from outside. For the light scattering material on the lamp bulb shell 40, light emitting out from the lamp bulb shell 40 is more evenly.

Please referring to FIG. 4, which illustrates an LED lamp 100a according to a second embodiment of the present invention. The LED lamp 100a of this embodiment is the same as the first embodiment in major, and is different from in that: a post 22a is arranged on the top surface of the heat transfer substrate 20a. The post 22a is coated with reflecting material at a side surface thereof. An LED lighting source 34a is arranged at a top surface of the post 22a, and is located above the LED light sources 32a of the light emitting unit 30a. The light emitting unit 30a is beneath the reflecting unit 50 and faces the reflecting unit 50, and the LED lighting source 34a is aligned with the aperture 526 of the reflecting unit 50. Light emitted by the LED lighting source 34a can pass through the aperture 526 to the top of the lamp bulb shell 40, and thus reinforces light distribution at the top of the lamp bulb shell 40, thereby shadows being totally avoided forming on the lamp bulb shell 40 for reflecting light of the reflecting unit 50.

From above, in the first and second embodiments, the LED lamps 100, 100a of the present invention form reflecting unit 50 in the lamp bulb shell 40, the reflecting member 52 of the reflecting unit 50 faces the light emitting unit 30, 30a, and the annular reflecting surfaces 522, 524 of the reflecting member 52 reflect light generated by the light emitting unit 30, 30a to the bottom of the lamp bulb shell 40, thus enhances luminous intensity at the bottom of the lamp bulb shell 40, which enlarges beam angle of the LED lamp 100, 100a. Compared with the prior art, the LED lamp 100,100a of the present invention is simple in structure since it need not to mount LED light sources 32, 32a on 3D structures. In addition, for the annular reflecting surface 522, 524 of the reflecting member 52 and the aperture 526, the reflecting member 52 does not block the light completely in any direction, thus light distribution on the lamp bulb shell 40 is more even, appearance of the lamp bulb shell 40 has no shadows, and phenomenon of spots and dark area are avoided, thereby the LED lamp 100, 100a of the present invention being easy to accepted by consumers.

Please referring to FIG. 5 and FIG. 6, which insulate an LED lamp 100b according to a third embodiment of the present invention. The LED lamp 100b includes a lamp holder 10b, a heat transfer substrate 20b, a light emitting unit 30b, a lamp bulb shell 40b, a reflecting unit 50b, a reflecting board 60, and a retaining lug 70.

The LED lamp 100b of the third embodiment is the same as the LED lamp 100 of the first embodiment in major, and difference therebetween is in that:
The light emitting unit 30b includes 20 LED light sources 32b, which are evenly arranged on an outer periphery of the top surface of the heat transfer substrate 20b and spaced from each other. Each LED light source 32b is about 0.3w.

The lamp bulb shell 40b is integrally formed as a whole and is generally spherical sector shaped, and has light scattering material coated on surfaces thereof.

The reflecting unit 50b includes a base 52b, a plurality of fixing poles 54b, and a reflecting member 56b.

The base 52b is coated with light scattering material on surfaces thereof, and is arranged on the heat transfer substrate 20b and beneath the light emitting unit 30b. The fixing poles 54b are three in number, extending from an outer periphery of the base 52b and spaced from each other (some of the fixing poles 54b are not shown for the angle of view). The fixing poles 54b fix the reflecting member 56b to the base 52b. The base 52b is fixed on the heat transfer substrate 20b, thereby fixing the reflecting member 56b on the lamp holder 10b.

Please referring to FIG. 6 and FIG. 7, the reflecting member 56b is annular-shaped. A through hole 561 is defined in a central portion of the reflecting member 56b. The reflecting member 56b includes a first annular surface 562b, a second annular surface 564b and a third annular surface 566b. The first annular surface 562b encircles the through hole 561, and has a diameter gradually decreased along the direction away from the light emitting unit 30b (as shown in FIG. 7). The second annular surface 564b is connected to an outer periphery of the first annular surface 562b, and cooperatively form a V-shaped cross section. A diameter of the second annular surface 564b gradually increases along the direction away from the light emitting unit 30b. A ratio of a distance between a junction of the first annular surface 562b and the second annular surface 564b and the heat transfer substrate 20b to a height of the lamp bulb shell 40b is 0.05∼0.125. The LED light sources 32b of the light emitting unit 30b are located around the junction of the first annular surface 562b and the second annular surface 564b. The third annular surface 566b is connected to an outer periphery of the second annular surface 564b. A diameter of the third annular surface 566b gradually increases along a direction towards the light emitting unit 30b.

Referring to FIG. 6 and FIG. 7, the reflecting board 60 is arranged on the heat transfer substrate 20b, corresponding to the second annular surface 564b and third annular surface 566b of the reflecting member 56b. The reflecting board 60 is disk-shaped matching the heat transfer substrate 20b, and defines a plurality of mounting holes 62 therein. The mounting holes 62 are the same as that of the LED light sources 32b in number, and have sizes and shapes corresponding to that of the LED light sources 32b, thereby the LED light sources 32b on the heat transfer substrate 20b exposed out of the reflecting board 60.

The retaining lug 70 is arranged in the lamp bulb shell 40b, and has a bottom connected to the top of the heat sink 14, and thus is fixed on the lamp holder 10b. Outer surfaces of the retaining lug 70 are coated with white paint with high reflection coefficient. The heat transfer substrate 20b is arranged on a top of the retaining lug 70. A ratio of a height of the retaining lug 70 and the height of the lamp bulb shell 40b is 0.25∼0.33.

During operation of the LED lamp 100b, the light emitting unit 30b emits light upwards to the reflecting member 56b of the reflecting unit 50b, and the second annular surface 564b and the third annular surface 566b of the reflecting member 56b reflect the light downwardly to a position beneath the heat transfer substrate 20b. The second annular surface 564b and the third annular surface 566b are connected as annular curved surface, thus lighting area of the light is enlarged. For the light scattering material of the lamp bulb shell 40b, the white paint of the retaining lug 70, and scattering of the reflecting board 60, luminous intensity at a portion of the lamp bulb shell 40b beneath the reflecting member 56b is also strong. Light distribution at a portion of the lamp bulb shell 40b above the reflecting member 56b is formed as follows: the first annular surface 562b reflects the light of the light emitting unit 30b towards two directions, one of which is downwards to the base 52b and is reflected by the base 52b upwardly to the top of the lamp bulb shell 40b to enhance light distribution at the top of the lamp bulb shell 40b; and the other of which shines aslant towards the top of the lamp bulb shell 40b, ensuring that luminous intensity at the top of the lamp bulb shell 40b is strong.

From above, the LED lamp 100b according to the third embodiment of the present invention includes a reflecting unit 50b which includes a reflecting member 56b, a reflecting board 60 beneath the reflecting member 56b, and a retaining lug 70 in the lamp bulb shell 40b, the second annular surface 564b and the third annular surface 566b of the reflecting member 56b, the reflecting board 60, and the retaining lug 70 and lamp bulb shell 40b of high scattering cooperate to ensure luminous intensity of the lamp bulb shell 40b beneath the reflecting member 56b, particularly beneath the heat transfer substrate 20b, enlarging beam angle of the LED lamp 100b. The third annular surface 566b, the base 52b, and the lamp bulb shell 40b of high scattering cooperate to ensure luminous intensity of the lamp bulb shell 40b above the reflecting member 56b. For the light emitting unit 30b including a plurality of densely packed LED light sources 32b of miniwatt, light distribution at surfaces of the lamp bulb shell 40b is uniform. The LED lamp 100b of the present invention has a beam angle enlarged to about 320 degrees, light distribution on the lamp bulb shell 40b is even, luminous intensity is uniform, appearance of the lamp bulb shell 40b has no shadow, and phenomenon of spots and dark area are avoided. In addition, the retaining lug 70 is connected to the heat sink 14, heat dissipation area of the LED lamp 100b of the present invention is large, and thus heat dissipation efficiency is high.

## Claims

1. An LED lamp (100b), comprising:
a lamp holder (10b);
a lamp bulb shell (40b);
a light emitting unit (30b), the lamp bulb shell (40b) covering the light emitting unit (30b), a bottom of the lamp bulb shell (40b) being fixed on the lamp holder (10b); and
a reflecting unit (50b) received in the lamp bulb shell (40b),
the reflecting unit (50b) comprising a reflecting member (56b),
the reflecting member (56b) being fixed on the lamp holder (10b),
the reflecting member (56b) comprising an annular reflecting surface, the reflecting surface of the reflecting member (56b) facing the lighting emitting unit (30b) for reflecting light generated by the light emitting unit (30b) towards a bottom of the lamp bulb shell (40b);
wherein the LED lamp further comprises a heat transfer substrate (20b), the heat transfer substrate (20b) is disk-shaped, the light emitting unit comprises a plurality of LED light sources (32b), the LED light sources (32b) are mounted on a periphery of the heat transfer substrate (20b) and spaced from each other, the reflecting member (50b) is annular, disk-shaped and defines a through hole at a central portion thereof, the reflecting surface of the reflecting member (56b) comprising a first annular surface (562b) and a second annular surface (564b), **characterized in that** the first annular surface (562b) is at a central portion of the reflecting member (56b) and has a diameter gradually decreasing along a direction away of the light emitting unit (30b), and the second annular surface (564b) is connected to a periphery of the first annular surface (562b) and cooperatively form a V-shaped cross section.

2. The LED lamp of claim 1, wherein the reflecting member (56b) further comprises a third annular surface (566b), the third annular surface (566b) is connected to a periphery of the second annular surface (564b), and a diameter of the third annular surface (566b) gradually increases along a direction towards the light emitting unit (30b).

3. The LED lamp of claim 1, further comprising a reflecting
board (60), the reflecting board (60) being mounted on the heat transfer substrate (20b), the reflecting board (60) defining a plurality of mounting holes (62) corresponding to the LED light sources (32b).

4. The LED lamp of claim 1, further comprising a retaining lug (70), the retaining lug (70) being mounted on a top of the lamp holder (10b), the heat transfer substrate (20b) being mounted on a top of the retaining lug (70), a ratio of a height of the retaining lug (70) to a height of the lamp bulb shell (40b) being 0.25∼0.33.

5. The LED lamp of each one of claims 1-3, wherein a ratio of a distance between a junction of the first annular surface (562b) and the second annular surface (564b) and the heat transfer substrate (20b) to a height of the lamp bulb shell (40b) is 0.05∼0.125.

6. The LED lamp of claim 1, wherein the light emitting unit (30b) comprises 20 LED light sources (32b), and each LED light source (32b) is 0.3w.

## Patentansprüche

1. LED-Lampe (100b), mit:
einem Lampenhalter (10b);
einer Lampenkolbenhülle (40b);
einer Lichtaussendeeinheit (30b), wobei die Lampenkolbenhülle (40b) die Lichtaussendeeinheit (30b) abdeckt, und wobei eine Unterseite der Lampenkolbenhülle (40b) an den Lampenhalter (10b) befestigt ist; und
einer Reflektiereinheit (50b), die in der Lampenkolbenhülle (40b) aufgenommen ist, wobei die Reflektiereinheit (50b) ein Reflektierelement (56b) aufweist, und wobei das Reflektierelement (56b) an den Lampenhalter (10b) befestigt ist, und wobei das Reflektierelement (56b) eine ringförmige Reflektierfläche aufweist, und wobei die Reflektierfläche des Reflektierelements (56b) zum Reflektieren von Licht, das durch die
Lichtaussendeeinheit (30b) erzeugt wird, zu einer Unterseite der Lampenkolbenhülle (40b) zu der Lichtaussendeeinheit (30b) gerichtet ist,
wobei die LED-Lampe ferner ein Wärmeübertragungssubstrat (20b) aufweist, wobei das Wärmeübertragungssubstrat (20b) scheibenförmig ist, und wobei die Lichtaussendeeinheit mehrere LED-Lichtquellen (32b) aufweist, wobei die LED-Lichtquellen (32b) an einem Rand des Wärmeübertragungssubstrats (20b) angebracht und
voneinander beabstandet sind, wobei das Reflektierelement (50b) ringförmig und scheibenförmig ist und an einer mittleren Position desselben eine Durchgangsöffnung definiert, wobei die Reflektierfläche des Reflektierelements (56b) eine erste ringförmige Fläche (562b) und eine zweite ringförmige Fläche (556b) aufweist,
**dadurch gekennzeichnet, dass** die erste ringförmige Fläche (562b) an einer mittleren Position des Reflektierelements (56b) ist und einen Durchmesser aufweist, der sich entlang einer Richtung von der Lichtaussendeeinheit (30b) weg allmählich verringert, und die zweite ringförmige Fläche (564b) an einen Rand der ersten ringförmigen Fläche (562b) verbunden ist und zusammen einen V-förmigen Querschnitt bilden.

2. LED-Lampe gemäß Anspruch 1, bei der das Reflektierelement (56b) ferner eine dritte ringförmige Fläche (566b) aufweist, wobei die dritte ringförmige Fläche (566b) an einen Rand der zweiten ringförmigen Fläche (564b) verbunden ist, und sich ein Durchmesser der dritten ringförmigen Fläche (566b) allmählich entlang einer Richtung zu der Lichtaussendeeinheit (30b) vergrößert.

3. LED-Lampe gemäß Anspruch 1, ferner mit einer Reflektierplatte (60), wobei die Reflektierplatte (60) an das Wärmeübertragungssubstrat (20b) angebracht ist, und wobei die Reflektierplatte (60) mehrere Anbringöffnungen (62) entsprechend den LED-Lichtquellen (32b) definiert.

4. LED-Lampe nach Anspruch 1, ferner mit einem Halteansatz (70), wobei der Halteansatz (70) an eine Oberseite des Lampenhalters (10b) angebracht ist, und wobei das Wärmeübertragungssubstrat (20b) an eine Oberseite des Halteansatzes (70) angebracht ist, und wobei ein Verhältnis der Höhe des Halteansatzes (70) zu einer Höhe der Lampenkolbenhülle (40b) 0,25 bis 0,33 beträgt.

5. LED-Lampe nach einem der Ansprüche 1 bis 3, bei der ein Verhältnis eines Abstands zwischen einer Verbindung der ersten ringförmigen Fläche (562b) und der zweiten ringförmigen Fläche (564b) und dem Wärmeübertragungssubstrat (20b) zu einer Höhe der Lampenkolbenhülle (40b) 0,05 bis 0,125 beträgt.

6. LED-Lampe nach Anspruch 1, bei der die Lichtaussendeeinheit (30b) 20 LED-Lichtquellen (32b) aufweist, und jede LED-Lichtquelle (32b) 0,3w beträgt.

## Revendications

1. Lampe à DEL (100b) comprenant :
une douille (10b) ;
une enveloppe d'ampoule (40b) ;
une unité électroluminescente (30b), l'enveloppe d'ampoule (40b) recouvrant l'unité électroluminescente (30b), une partie inférieure de l'enveloppe d'ampoule (40b) étant fixée sur la douille (10b) ; et
une unité réfléchissante (50b) logée dans l'enveloppe d'ampoule (40b), l'unité réfléchissante (50b) comprenant un élément réfléchissant (56b), l'élément réfléchissant (56b) étant fixé sur la douille (10b),
l'élément réfléchissant (56b) comprenant une surface réfléchissante annulaire, la surface réfléchissante de l'élément réfléchissant faisant face à l'unité électroluminescente (30b) pour réfléchir la lumière générée par l'unité électroluminescente (30b) vers une partie inférieure de l'enveloppe d'ampoule (40b) ;
dans lequel la lampe à DEL comprend en outre un substrat de transfert de chaleur (20b), le substrat de transfert de chaleur (20b) est en forme de disque, l'unité électroluminescente comprend une pluralité de sources de lumière à DEL (32b), les sources de lumière à DEL (32b) sont montées sur une périphérie du substrat de transfert de chaleur (20b) et espacées l'une de l'autre, l'élément réfléchissant (50b) est en forme de disque annulaire et définit un trou passant dans sa portion centrale, la surface réfléchissante de l'élément réfléchissant (56b) comprenant une première surface annulaire (562b) et une deuxième surface annulaire (564b), **caractérisée en ce que** la première surface annulaire (562b) est située dans une portion centrale de l'élément réfléchissant (56b) et a un diamètre progressivement décroissant dans une direction s'éloignant de l'unité électroluminescente (30b), et la deuxième surface annulaire (564b) est connectée à une périphérie de la première surface annulaire (562b) et elles forment conjointement une section transversale en V.

2. Lampe à DEL selon la revendication 1, dans laquelle l'élément réfléchissant (56b) comprend en outre une troisième surface annulaire (566b), la troisième surface annulaire (566b) est connectée à une périphérie de la deuxième surface annulaire (564b) et le diamètre de la troisième surface annulaire (566b) augmente progressivement dans une direction vers l'unité électroluminescente (30b).

3. Lampe à DEL selon la revendication 1, comprenant en outre une plaque réfléchissante (60), la plaque réfléchissante (60) étant montée sur le substrat de transfert de chaleur (20b), la plaque réfléchissante (60) définissant une pluralité de trous de montage (62) correspondant aux sources de lumière à DEL (32b).

4. Lampe à DEL selon la revendication 1, comprenant en outre une patte de retenue (70), la patte de retenue (70) étant montée sur un dessus de la douille (10b), le substrat de transfert de chaleur (20b) étant monté sur un dessus de la patte de retenue (70), le rapport de la hauteur de la patte de retenue (70) à la hauteur de l'enveloppe d'ampoule (40b) étant de 0,25 à 0,33.

5. Lampe à DEL selon chacune des revendications 1 à 3, dans laquelle le rapport de la distance entre une jonction de la première surface annulaire (562b) et de la deuxième surface annulaire (564b) et le substrat de transfert de chaleur (20b) à la hauteur de l'enveloppe d'ampoule (40b) est de 0,05 à 0,125.

6. Lampe à DEL selon la revendication 1, dans laquelle l'unité électroluminescente (30b) comprend 20 sources de lumière à DEL (32b) et chaque source de lumière à DEL (32b) est de 0,3 W.
